(19)

Europäisches Patentamt
European Patent Office
Office européen des brevets

(11) **EP 4 318 026 A1**

(12) **EUROPEAN PATENT APPLICATION**
published in accordance with Art. 153(4) EPC

(43) Date of publication:
**07.02.2024 Bulletin 2024/06**

(21) Application number: **22779370.0**

(22) Date of filing: **13.01.2022**

(51) International Patent Classification (IPC):
*G01S 7/481* [(2006.01)]    *G02B 26/08* [(2006.01)]
*G02B 26/10* [(2006.01)]

(52) Cooperative Patent Classification (CPC):
**G01S 7/481; G02B 26/08; G02B 26/10**

(86) International application number:
**PCT/JP2022/000998**

(87) International publication number:
**WO 2022/209137 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2021 JP 2021056177**

(71) Applicant: **FUJIFILM Corporation
Tokyo 106-8620 (JP)**

(72) Inventor: **NAKABAYASHI, Koki
Ashigarakami-gun, Kanagawa 258-8577 (JP)**

(74) Representative: **HGF
HGF Limited
1 City Walk
Leeds LS11 9DX (GB)**

(54) **OPTICAL SYSTEM AND LIGHT SCANNING DEVICE**

(57)    There is provided an optical system on which polarized light polarized by a movable mirror is incident, including: a first reflecting member that is rotationally symmetric with respect to a first axis and has a first reflecting surface that reflects the polarized light to emit reflected light as first reflected light; and a second reflecting member that is rotationally symmetric with respect to the first axis and has a second reflecting surface that reflects the first reflected light to emit reflected light as second reflected light. A cross-sectional shape of the first reflecting surface cut along a plane parallel to the first axis is concave. A cross-sectional shape of the second reflecting surface cut along the plane parallel to the first axis is convex. An optical path of the first reflected light is parallel to the first axis. An optical path of the second reflected light is directed outward from the first axis.

FIG. 6

EP 4 318 026 A1

**Description**

**BACKGROUND OF THE INVENTION**

1. Field of the Invention

The technology of the present disclosure relates to an optical system and an optical scanning apparatus.

2. Description of the Related Art

In recent years, there has been significant research and development in enabling autonomous driving control by mounting an optical scanning apparatus called light detection and ranging (LiDAR) on a vehicle or the like to acquire distance information on a surrounding obstacle and estimating its own position. Therefore, there is a demand for improvements in the performance of the LiDAR, and developments are underway to obtain a compact and lightweight LiDAR capable of broad angle-of-view and high-resolution scanning.

There are currently two main types of LiDAR that are commercially available. A first type is a mechanical scanning type in which a laser light source and a light-receiving element are rotated by a mechanical mechanism, such as a motor, to perform scanning with laser light in all directions, covering 360 degrees (hereinafter, referred to as omnidirectional scanning). A second type is a micro electro mechanical systems (MEMS) type in which scanning is performed by polarizing laser light using a movable mirror (also referred to as a MEMS mirror) composed of MEMS. The MEMS type is more compact and lightweight than the mechanical scanning type and is capable of high-speed scanning.

Omnidirectional scanning is also possible in the MEMS type LiDAR (for example, see WO2019/167587A and "Resonant biaxial 7-mm MEMS mirror for omnidirectional scanning", J. Micro/Nanolith. MEMS MOEMS 13 (1), 011103 (Jan-Mar 2014)). WO2019/167587A describes a MEMS type LiDAR that uses a rotationally symmetric optical system for converting a direction of light polarized by a movable mirror into a horizontal direction to enable omnidirectional scanning.

**SUMMARY OF THE INVENTION**

In the MEMS type LiDAR, in a case where omnidirectional scanning is performed using the rotationally symmetric optical system, the light polarized by the movable mirror is reflected by the optical system and then emitted from the LiDAR to an outside as scanning light. In this case, there is a probability that the scanning light emitted from the LiDAR may undergo a spread of a beam diameter due to reflection in the optical system. In a case where the beam diameter spreads, the spatial resolution of distance measurement may decrease. The optical system described in WO2019/167587A does not consider a decrease in resolution due to the spread of the beam diameter.

In addition, the optical system described in "Resonant biaxial 7-mm MEMS mirror for omnidirectional scanning", J. Micro/Nanolith. MEMS MOEMS 13 (1), 011103 (Jan-Mar 2014) is realized only in a case where a movable angle (also referred to as a deflection angle) of the MEMS mirror reaches 15 degrees. However, in reality, since the reachable movable angle is only up to 6.5 degrees, the optical system described in "Resonant biaxial 7-mm MEMS mirror for omnidirectional scanning", J. Micro/Nanolith. MEMS MOEMS 13 (1), 011103 (Jan-Mar 2014) is not realized. As described above, it is known that it is difficult to realize an optical system capable of omnidirectional scanning, particularly in a case where the movable angle of the MEMS mirror is small.

An object of the technology of the present disclosure is to provide an optical system and an optical scanning apparatus capable of suppressing a decrease in resolution.

In order to achieve the above-described object, according to the present disclosure, there is provided an optical system on which polarized light polarized by a movable mirror is incident, comprising: a first reflecting member that is rotationally symmetric with respect to a first axis and has a first reflecting surface that reflects the polarized light to emit reflected light as first reflected light; and a second reflecting member that is rotationally symmetric with respect to the first axis and has a second reflecting surface that reflects the first reflected light to emit reflected light as second reflected light, in which a cross-sectional shape of the first reflecting surface cut along a plane parallel to the first axis is concave, a cross-sectional shape of the second reflecting surface cut along the plane parallel to the first axis is convex, an optical path of the first reflected light is parallel to the first axis, and an optical path of the second reflected light is directed outward from the first axis.

It is preferable that the movable mirror rotationally moves in a state in which a normal direction thereof is tilted in a certain angular range with respect to the first axis.

It is preferable that the polarized light is parallel light, and that a converged position of the first reflected light and a converged position of a virtual image of reflected light, which is reflected by the second reflecting surface in a case where parallel light is made virtually incident on the second reflecting surface from the optical path of the second reflected light, coincide with each other.

It is preferable that f1 denoting a distance from the first reflecting surface to the converged position of the first reflected light, f2 denoting a distance from the second reflecting surface to the converged position of the virtual image, and d denoting a distance on the first axis between the first reflecting surface and the second reflecting surface are within a range of $0.9 \times d \le f1 - f2 \le 1.1 \times d$.

It is preferable that a shape of any one of the first reflecting surface or the second reflecting surface is a hyperbolic surface.

It is preferable that a shape of any one of the first reflecting surface or the second reflecting surface is an odd-order aspherical surface.

It is preferable that a prism that is rotationally symmetric with respect to the first axis, is disposed outward of the second reflecting member, and refracts the second reflected light is further provided.

It is preferable that a cross-sectional shape of the prism cut along the plane parallel to the first axis is a triangle.

According to the present disclosure, there is provided an optical scanning apparatus comprising: the optical system according to any one of the above; a movable mirror device that has the movable mirror; and a light source that emits light to be incident on the movable mirror.

It is preferable that the light is incident on the movable mirror along the first axis.

It is preferable that the second reflected light is emitted as scanning light in all directions around the first axis.

According to the technology of the present disclosure, it is possible to provide an optical system and an optical scanning apparatus capable of suppressing a decrease in resolution.

## BRIEF DESCRIPTION OF THE DRAWINGS

Fig. 1 is a block diagram showing an example of a schematic configuration of a LiDAR apparatus.

Fig. 2 is a perspective view showing an example of a schematic configuration of a movable mirror device.

Fig. 3 is a diagram showing a state in which a movable mirror performs a precession motion.

Fig. 4 is a schematic perspective view showing an example of an optical system.

Fig. 5 is a schematic exploded perspective view showing an example of the optical system.

Fig. 6 is a schematic cross-sectional view showing an example of the optical system.

Fig. 7 is a diagram illustrating a positional relationship between a first reflecting surface, a second reflecting surface, and the movable mirror.

Fig. 8 is a diagram showing values of parameters representing shapes of a first reflecting surface and a second reflecting surface according to a first embodiment.

Fig. 9 is a simulation image showing a cross-sectional shape of scanning light according to the first embodiment.

Fig. 10 is a diagram showing values of parameters representing shapes of a first reflecting surface and a second reflecting surface according to a second embodiment.

Fig. 11 is a simulation image showing a cross-sectional shape of scanning light according to the second embodiment.

Fig. 12 is a schematic cross-sectional view showing a configuration of an optical system according to a third embodiment.

Fig. 13 is a diagram showing values of parameters representing shapes of a first reflecting surface and a second reflecting surface according to the third embodiment.

Fig. 14 is a simulation image showing a cross-sectional shape of scanning light according to the third embodiment.

Fig. 15 is a diagram illustrating vertical scanning according to a fourth embodiment.

Fig. 16 is a diagram showing values of parameters representing shapes of a first reflecting surface and a second reflecting surface according to the fourth embodiment.

Figs. 17A to 17C are each a simulation image showing a cross-sectional shape of scanning light according to the fourth embodiment.

Fig. 18 is a schematic cross-sectional view showing a configuration of an optical system according to a comparative example.

Fig. 19 is a diagram showing values of parameters representing shapes of a first reflecting surface and a second reflecting surface according to the comparative example.

Fig. 20 is a simulation image showing a cross-sectional shape of scanning light according to the comparative example.

## DESCRIPTION OF THE PREFERRED EMBODIMENTS

An example of an embodiment according to the technology of the present disclosure will be described with reference to the accompanying drawings.

[First Embodiment]

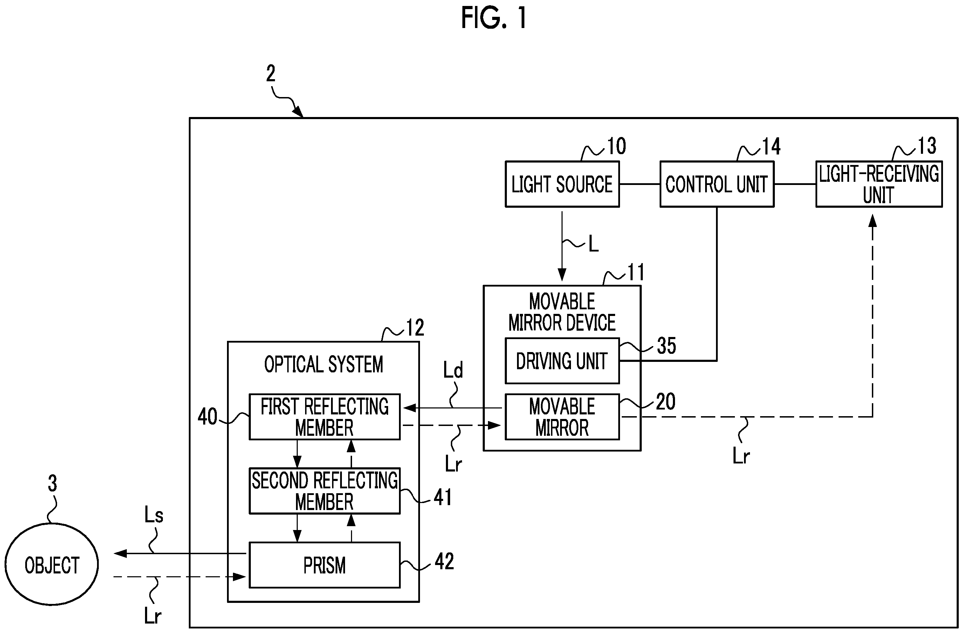

Fig. 1 shows a schematic configuration of a LiDAR apparatus 2 according to one embodiment. The LiDAR apparatus 2 emits scanning light Ls to an object 3, receives return light Lr thereof, and measures a distance to the object 3. The LiDAR apparatus 2 is mounted on, for example, an automobile and acquires distance information on a surrounding obstacle. The LiDAR apparatus 2 is an example of an "optical scanning apparatus" according to the technology of the present disclosure.

As shown in Fig. 1, the LiDAR apparatus 2 comprises a light source 10, a movable mirror device 11, an optical system 12, a light-receiving unit 13, and a control unit 14. The movable mirror device 11 includes a movable mirror 20 and a driving unit 35 for driving the movable mirror 20. The optical system 12 includes a first reflecting member 40, a second reflecting member 41, and a prism 42.

The light source 10 is, for example, a laser diode and emits laser light L toward the movable mirror 20 of the movable mirror device 11. The laser light L is, for example, an infrared ray having a wavelength of 905 nm. Further, the laser light L is, for example, in the form of a pulse. The laser light L is an example of "light emitted by a light source" according to the technology of the present disclosure.

The light source 10 is not limited to a laser diode, and a laser having various configurations, such as a diode pumped solid state (DPSS) laser or a fiber laser, can be used. Further, the laser light is not limited to the above-described laser light, and for example, pulsed laser light having a wavelength range of 850 nm to 1550 nm in a near-infrared spectrum and generally used for LiDAR can be used.

The movable mirror 20 polarizes the laser light L by reflecting the laser light L incident from the light source 10. That is, the movable mirror 20 reflects the incident laser light L to emit reflected light as polarized light Ld. The polarized light Ld emitted from the movable mirror 20 is incident on the optical system 12. The polarized light Ld incident on the optical system 12 is reflected in order by the first reflecting member 40 and the second reflecting member 41, refracted by the prism 42, and then emitted to an outside of the LiDAR apparatus 2 as scanning light Ls.

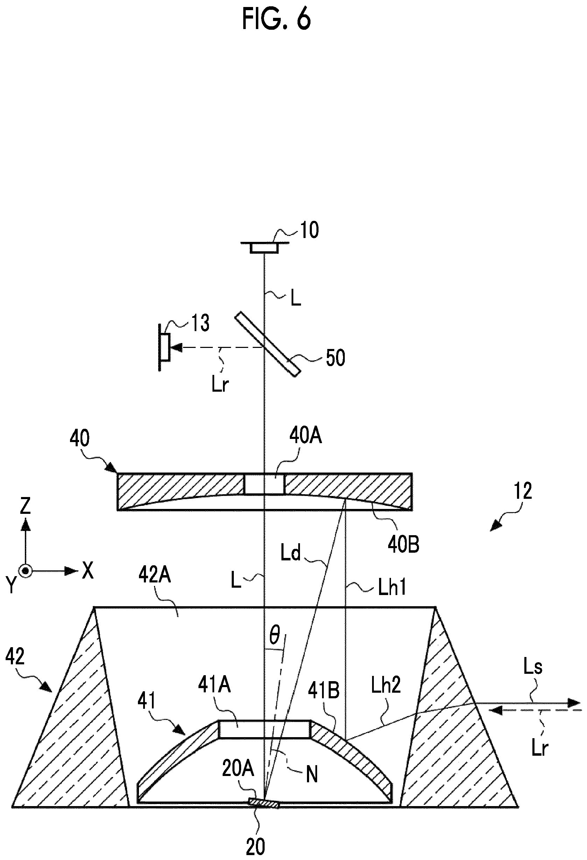

The return light Lr from the object 3 is incident on the optical system 12. The return light Lr incident on the optical system 12 is refracted by the prism 42, reflected in order by the second reflecting member 41 and the first reflecting member 40, and then incident on the movable mirror 20. The return light Lr incident on the movable mirror 20 is polarized by the movable mirror 20 and then reflected by, for example, a half mirror 50 (see Fig. 6), thereby being guided to the light-receiving unit 13. Instead of the half mirror 50, a mirror having a through-hole through which the laser light L passes and having a reflecting surface that reflects the return light Lr may be used.

The light-receiving unit 13 receives the return light Lr and generates a detection signal corresponding to an amount of the received return light Lr. The light-receiving unit 13 is composed of, for example, an avalanche photodiode. The detection signal generated by the light-receiving unit 13 is input to the control unit 14.

The control unit 14 controls the emission of the laser light L from the light source 10 and performs processing of calculating the distance to the object 3 based on the detection signal input from the light-receiving unit 13. Further, the control unit 14 supplies a driving voltage for driving the movable mirror 20 to the driving unit 35.

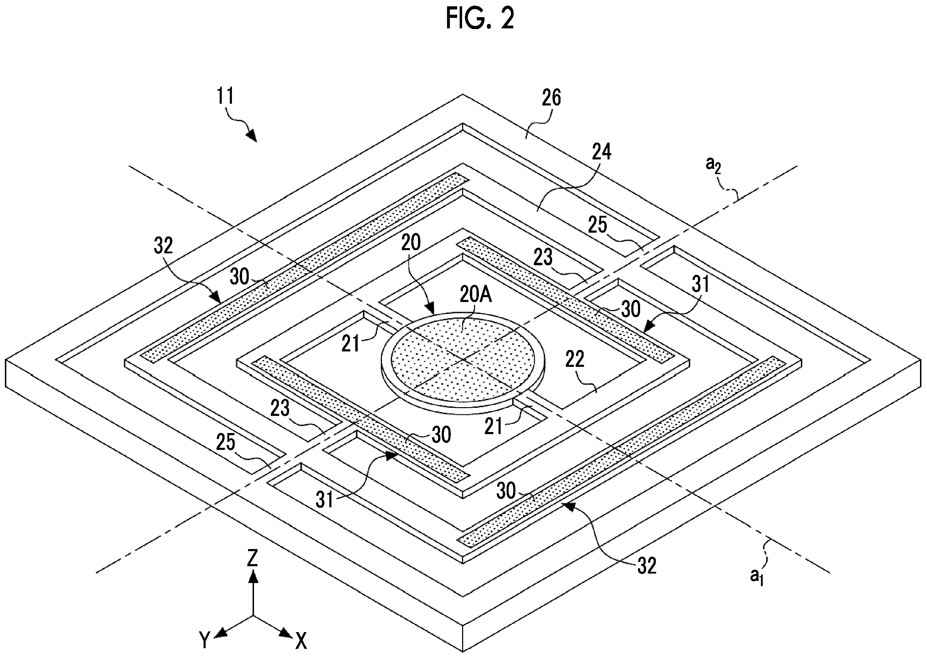

Fig. 2 shows a schematic configuration of the movable mirror device 11. The movable mirror device 11 is a micromirror device formed by etching a silicon-on-insulator (SOI) substrate. The movable mirror device 11 is also referred to as a MEMS mirror device.

The movable mirror device 11 includes the movable mirror 20, first support portions 21, a first movable frame 22, second support portions 23, a second movable frame 24, connecting portions 25, and a fixed frame 26. The movable mirror device 11 is a so-called MEMS scanner.

The movable mirror 20 includes a reflecting surface 20A that reflects incidence light. The reflecting surface 20A is formed of, for example, a metal thin film, such as gold (Au), aluminum (Al), silver (Ag), or an alloy of silver, provided on one surface of the movable mirror 20. A shape of the reflecting surface 20A is, for example, a circular shape centered on an intersection between an axis $a_1$ and an axis $a_2$.

The first support portions 21 are disposed outward of the movable mirror 20 at positions facing each other across the axis $a_2$. The first support portions 21 are connected to the movable mirror 20 on the axis $a_1$ and support the movable mirror 20 in a swingable manner around the axis $a_1$. In the present embodiment, the first support portions 21 are torsion bars that stretch along the axis $a_1$.

The first movable frame 22 is a rectangular frame that surrounds the movable mirror 20 and is connected to the movable mirror 20 on the axis $a_1$ via the first support portions 21. Piezoelectric elements 30 are formed on the first movable frame 22 at positions facing each other across the axis $a_1$. In this way, a pair of first actuators 31 are composed of two piezoelectric elements 30 formed on the first movable frame 22.

The pair of first actuators 31 are disposed at positions facing each other across the axis $a_1$. The first actuator 31 applies a rotational torque around the axis $a_1$ to the movable mirror 20, thereby swinging the movable mirror 20 around the axis $a_1$.

The second support portions 23 are disposed outward of the first movable frame 22 at positions facing each other across the axis $a_1$. The second support portions 23 are connected to the first movable frame 22 on the axis $a_2$ and support the first movable frame 22 and the movable mirror 20 in a swingable manner around the axis $a_2$. In the present embodiment, the second support portions 23 are torsion bars that stretch along the axis $a_2$.

The second movable frame 24 is a rectangular frame surrounding the first movable frame 22 and is connected to the first movable frame 22 on the axis $a_2$ via the second support portions 23. Piezoelectric elements 30 are formed on the second movable frame 24 at positions facing each other across the axis $a_2$. In this way, a pair of second actuators 32 are composed of two piezoelectric elements 30 formed on the second movable frame 24.

The pair of second actuators 32 are disposed at positions facing each other across the axis $a_2$. The second actuator 32 applies a rotational torque around the axis $a_2$ to the movable mirror 20 and the first movable frame 22, thereby swinging the movable mirror 20 around the axis $a_2$.

The connecting portions 25 are disposed outward of the second movable frame 24 at positions facing each other across the axis $a_1$. The connecting portions 25 are connected to the second movable frame 24 on the axis $a_2$.

The fixed frame 26 is a rectangular frame surrounding the second movable frame 24 and is connected to the second movable frame 24 on the axis $a_2$ via the connecting portions 25.

In the following description, a normal direction of the reflecting surface 20A in a state in which the movable mirror 20 is not tilted is denoted by a Z-axis direction, one direction orthogonal to the Z-axis direction is denoted by an X-axis direction, and a direction orthogonal to the Z-axis direction and the X-axis direction is denoted by a Y-axis direction.

The pair of first actuators 31 and the pair of second actuators 32 correspond to the above-described driving unit 35. The above-described control unit 14 drives the movable mirror 20 in a precession motion by applying driving voltages of sinusoidal waves having phases different from each other to the pair of first actuators 31 and the pair of second actuators 32.

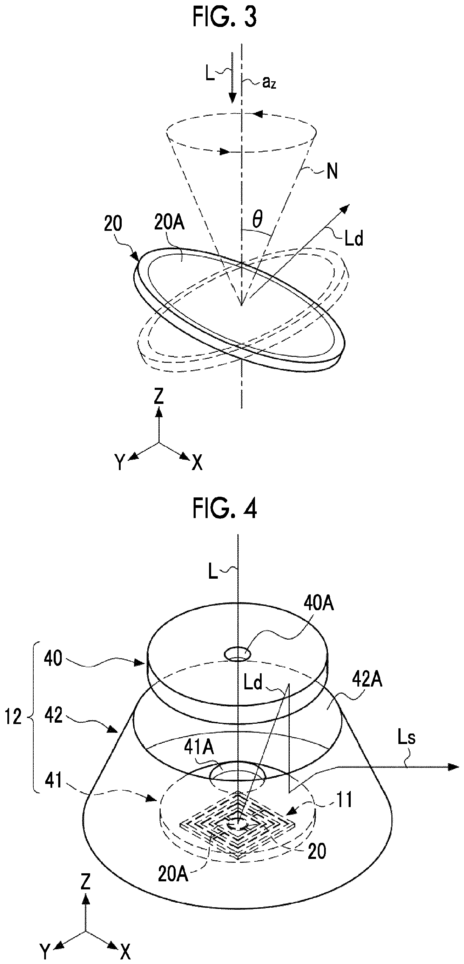

Fig. 3 shows a state in which the movable mirror 20 performs a precession motion. The precession motion is a motion in which a normal line N of the reflecting surface 20A of the movable mirror 20 is deflected in a circular pattern. That is, the movable mirror 20 rotationally moves in a state in which the normal direction thereof is tilted in a certain angular range with respect to a Z-axis $a_z$. The Z-axis $a_z$ is an axis that is parallel to the Z-axis direction and that passes through the center of the movable mirror 20. The Z-axis $a_z$ is an example of a "first axis" according to the technology of the present disclosure.

The laser light L emitted from the light source 10 is incident on the center of the movable mirror 20 along the Z-axis $a_z$. As shown in Fig. 3, the polarized light Ld polarized by the movable mirror 20 performing the precession motion is emitted from the movable mirror 20 in a circular pattern.

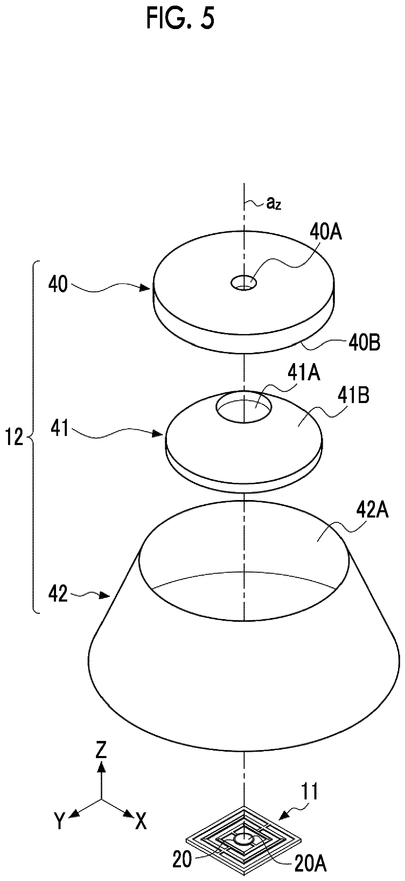

Figs. 4 to 6 each show a configuration of the optical system 12. Fig. 4 is a schematic perspective view of the optical system 12. Fig. 5 is a schematic exploded perspective view of the optical system 12. Fig. 6 is a schematic cross-sectional view of the optical system 12 cut along the Z-axis $a_z$. Each of the first reflecting member 40, the second reflecting member 41, and the prism 42 constituting the optical system 12 has a shape rotationally symmetric with respect to the Z-axis $a_z$. The first reflecting member 40 and the second reflecting member 41 are disposed in the order of the first reflecting member 40 and the second reflecting member 41 along a traveling direction of the laser light L emitted from the light source 10.

The first reflecting member 40 has a substantially disc-like outer shape, and a hole 40A through which the laser light L passes is formed in the center thereof. The first reflecting member 40 includes a first reflecting surface 40B formed on a second reflecting member 41 side. The first reflecting surface 40B is rotationally symmetric with respect to the Z-axis $a_z$. In addition, a cross-sectional shape of the first reflecting surface 40B cut along a plane parallel to the Z-axis $a_z$ is concave.

The polarized light Ld emitted from the movable mirror 20 is incident on the first reflecting surface 40B. The first reflecting surface 40B reflects the incident polarized light Ld to emit reflected light as first reflected light Lh1. The optical path of the first reflected light Lh1 emitted from the first reflecting surface 40B is parallel to the Z-axis $a_z$.

A hole 41A through which the laser light L and the polarized light Ld pass is formed in the center of the second reflecting member 41. The second reflecting member 41 includes a second reflecting surface 41B formed on a first reflecting member 40 side. The second reflecting surface 41B is rotationally symmetric with respect to the Z-axis $a_z$. In addition, a cross-sectional shape of the second reflecting surface 41B cut along the plane parallel to the Z-axis $a_z$ is convex.

The first reflected light Lh1 is incident on the second reflecting surface 41B from the first reflecting surface 40B. The second reflecting surface 41B reflects the incident first reflected light Lh1 to emit reflected light as second reflected light Lh2. An optical path of the second reflected light Lh2 emitted from the second reflecting surface 41B is directed outward from the Z-axis $a_z$. The direction outward from the Z-axis $a_z$ is a radial direction of a circle centered on the Z-axis $a_z$.

A cavity 42A for accommodating the second reflecting member 41 is formed in the center of the prism 42. The prism 42 is rotationally symmetric with respect to the Z-axis $a_z$ and is disposed outward of the second reflecting member 41. In addition, a cross-sectional shape of the prism 42 cut along the plane parallel to the Z-axis $a_z$ is a triangle. The second reflected light Lh2 is incident on the prism 42 from the second reflecting surface 41B. The prism 42 refracts the second reflected light Lh2 incident from the second reflecting surface 41B to emit refracted light as the scanning light Ls. An emission direction of the scanning light Ls is, for example, a direction orthogonal to the Z-axis $a_z$. That is, the scanning light Ls is emitted in all directions around the Z-axis $a_z$.

As shown in Fig. 6, the half mirror 50 is disposed on the optical path of the laser light L emitted from the light source 10. The half mirror 50 transmits the laser light L from the light source 10 to be incident on the movable mirror 20, and also reflects the return light Lr reflected by the movable mirror 20 to be incident on the light-receiving unit 13.

The laser light L emitted from the light source 10 is transmitted through the half mirror 50, passes through the hole 40A of the first reflecting member 40 and the hole 41A of the second reflecting member 41, and is incident on the movable mirror 20. The laser light L incident on the movable mirror 20 is reflected by the movable mirror 20 and is emitted from the movable mirror 20 as the polarized light Ld. The polarized light Ld emitted from the movable mirror 20 passes through the hole 41A of the second reflecting member 41 and is incident on the first reflecting surface 40B of the first reflecting member 40.

The polarized light Ld incident on the first reflecting surface 40B is reflected by the first reflecting surface 40B and is emitted from the first reflecting surface 40B as the first reflected light Lh1. The first reflected light Lh1 emitted from the first reflecting surface 40B travels along the Z-axis $a_z$ and is incident on the second reflecting surface 41B of the second reflecting member 41.

The first reflected light Lh1 incident on the second reflecting surface 41B is reflected by the second reflecting surface 41B and is emitted from the second reflecting surface 41B as the second reflected light Lh2. The second reflected light Lh2 emitted from the second reflecting surface 41B travels in a direction extending outward from the Z-axis $a_z$ and is incident on the prism 42. The second reflected light Lh2 incident on the prism 42 is refracted and then emitted from the prism 42 toward the object 3 (see Fig. 1) as the scanning light Ls.

The return light Lr from the object 3 is incident on the prism 42, travels in an opposite direction of the optical paths of the polarized light Ld, the first reflected light Lh1, and the second reflected light Lh2, and is incident on the movable mirror 20. The return light Lr is reflected by the movable mirror 20 and then passes through the hole 41A of the second reflecting member 41 and the hole 40A of the first reflecting member 40 and is incident on the half mirror 50. A part of the return light Lr incident on the half mirror 50 is reflected by the half mirror 50 and is incident on the light-receiving unit 13.

The first reflecting surface 40B and the second reflecting surface 41B are formed of, for example, a metal film, such as a gold (Au), aluminum (Al), or silver (Ag) compound. The first reflecting surface 40B and the second reflecting surface 41B may be formed of a multilayer reflecting film.

The prism 42 is formed of an optical resin, such as acrylic, polycarbonate, or Zeonex.

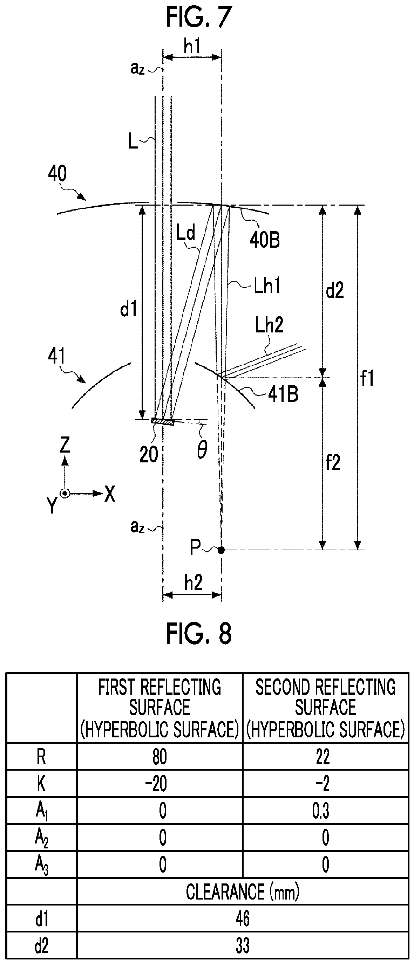

Fig. 7 illustrates a positional relationship between the first reflecting surface 40B, the second reflecting surface 41B, and the movable mirror 20. In Fig. 7, h1 represents a distance from an incident position of the polarized light Ld on the first reflecting surface 40B to the Z-axis $a_z$. h2 represents a distance from an incident position of the first reflected light Lh1 on the second reflecting surface 41B to the Z-axis $a_z$. d1 represents a distance in the Z-axis direction from the incident position of the polarized light Ld on the first reflecting surface 40B to the movable mirror 20.

Conditions for reducing a spread angle of the laser light L in the configuration shown in Fig. 7 will be described separately for a direction orthogonal to the Z-axis $a_z$ (hereinafter, referred to as a horizontal direction) and a direction parallel to the Z-axis $a_z$ (hereinafter, referred to as a vertical direction). The reason for describing the conditions for reducing the spread angle of the laser light L separately for the horizontal direction and the vertical direction is because curvatures of the first reflecting surface 40B and the second reflecting surface 41B differ depending on the cross-sectional direction of the beam of the laser light L.

First, a condition for reducing the spread angle of the laser light L with respect to the horizontal direction will be described. The curvature of the first reflecting surface 40B and the value of the distance d1 are determined so as to satisfy a relationship of h1 = h2. By determining the curvature of the first reflecting surface 40B and the value of the distance d1 such that h1 = h2 is satisfied, a convergence angle of the laser light L with respect to the horizontal direction in the first reflecting surface 40B and the spread angle of the laser light L with respect to the horizontal direction in the second reflecting surface 41B are the same. In this way, the convergence and the spread of the laser light L cancel each other out, so that the laser light L with respect to the horizontal direction becomes parallel light, h1 = h2 need only be satisfied at at least one deflection angle θ. In addition, h1 and h2 need not be completely the same value and need only be substantially the same.

Next, a condition for reducing the spread angle of the laser light L with respect to the vertical direction will be described. As shown in Fig. 7, in a case where the laser light L incident on the movable mirror 20 is a parallel light beam (that is, parallel light), the polarized light Ld is incident on the first reflecting surface 40B as parallel light. Since the first reflecting surface 40B is a concave surface, the first reflected light Lh1 emitted from the first reflecting surface 40B is convergent light. Since the second reflecting surface 41B is a convex surface, the second reflecting surface 41B diverges reflected light when reflecting the first reflected light Lh1. The curvature of the second reflecting surface 41B is determined such that the second reflected light Lh2 is substantially parallel light.

In Fig. 7, P indicates a converged position of the first reflected light Lh1 in a case where the second reflecting surface 41B does not exist. It is preferable that a converged position of a virtual image of reflected light, which is reflected by the second reflecting surface 41B in a case where parallel light is made virtually incident on the second reflecting surface 41B from the optical path of the second reflected light Lh2, coincides with the converged position P of the first reflected light Lh1. The converged position of the virtual image and the converged position P of the first reflected light Lh1 coincide with each other, so that the second reflected light Lh2 becomes parallel light.

In other words, the curvature of the second reflecting surface 41B is determined so as to satisfy a relationship of f1 = f2 + d2. Here, f1 is a distance from the incident position of the polarized light Ld on the first reflecting surface 40B to the converged position of the first reflected light Lh1. f2 is a distance from the incident position of the first reflected light Lh1 on the second reflecting surface 41B to the converged position of the above-described virtual image. d2 is a distance from the incident position of the polarized light Ld on the first reflecting surface 40B to the incident position of the first reflected light Lh1 on the second reflecting surface 41B. The relationship of f1 = f2 + d2 need only be satisfied at at least one deflection angle $\theta$.

In addition, the converged position of the virtual image and the converged position P of the first reflected light Lh1 need not completely coincide with each other and need only substantially coincide with each other. For example, a difference between f1 and f2 need only be within a range of $0.9 \times d2 \leq f1 - f2 \leq 1.1 \times d2$. This is because oblique incidence on a curved surface may cause astigmatism, resulting in a slight shift in the focal lengths in the horizontal direction and the vertical direction. Since this amount of shift is about 10% based on design experience, it can be said that the converged position of the virtual image and the converged position P of the first reflected light Lh1 substantially coincide with each other in a case where the difference between f1 and f2 is within the above-described range. f1 > f2, and "f1 - f2" is a positive value.

The first reflecting surface 40B and the second reflecting surface 41B are each an aspherical surface. In general, the shape of the reflecting surface is represented by Equation (1), which is a definitional equation of the aspherical surface.

$$z = \left(\frac{1}{R}\right)\frac{h^2}{1+\sqrt{1-(1+K)\left(\frac{1}{R}\right)^2 h^2}} + A_1 h + A_2 h^2 + A_3 h^3 + \cdots \qquad (1)$$

z represents coordinates in the Z-axis direction. h represents a distance from the Z-axis $a_z$. R is a curvature radius. K is a conic coefficient. A1 to A3 are aspherical coefficients. R, K, and A1 to A3 are parameters that determine the shape of the reflecting surface. In the present disclosure, all aspherical coefficients of the fourth order or higher are set to zero.

In a case of K = 0, the reflecting surface is a spherical surface. In a case of 0 > K > -1, the reflecting surface is an elliptical surface. In a case of K = -1, the reflecting surface is a parabolic surface. In a case of -1 > K, the reflecting surface is a hyperbolic surface.

In the present embodiment, both the first reflecting surface 40B and the second reflecting surface 41B are hyperbolic surfaces. The parameters representing the shapes of the first reflecting surface 40B and the second reflecting surface 41B are set to the values shown in Fig. 8. In addition, d1 and d2 described above are set to the values shown in Fig. 8.

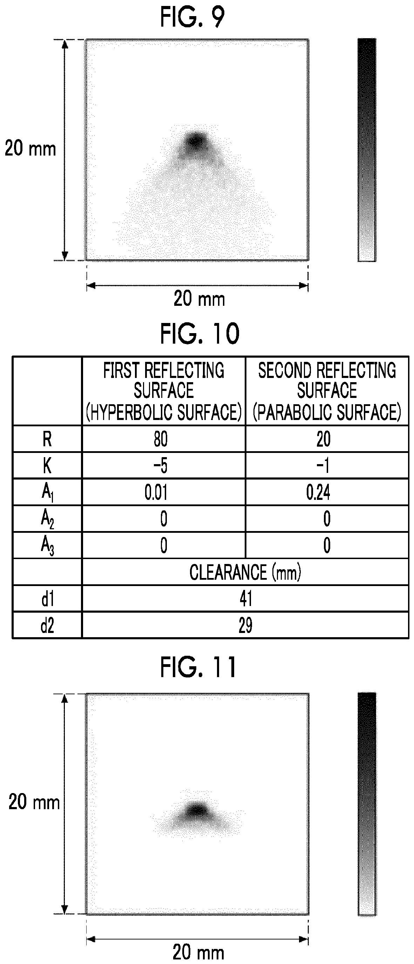

Fig. 9 shows an example of the cross-sectional shape of the scanning light Ls emitted from the optical system 12 in a case where $\theta$ = 6.5 degrees is set by using the optical system 12 configured based on the condition shown in Fig. 8. Fig. 9 is a simulation image showing a cross-sectional shape of the scanning light Ls at a location about 1 m away from the optical system 12. In the image shown in Fig. 9, the vertical direction is parallel to the Z-axis direction, and the horizontal direction is parallel to the direction orthogonal to the Z-axis direction.

In this simulation, the simulation values of h1 and h2 shown in Fig. 7 were h1 = 10.3 mm and h2 = 10.4 mm. That is, almost equal values were obtained as h1 and h2. In addition, the simulation values of f1 and f2 shown in Fig. 7 were f1 = 58 mm and f2 = 23 mm. That is, the difference between f1 and f2 was 35 mm, which was almost equal to the value of d2 (33 mm) shown in Fig. 8.

A beam diameter (full width at half maximum) of the scanning light Ls shown in Fig. 9 is approximately 1.6 mm in both the vertical direction and the horizontal direction. That is, the spread angle $\alpha$ of the scanning light Ls is calculated as $\alpha = \tan^{-1}(1.6/1000) \approx 0.09$ degrees.

[Second Embodiment]

In the above-described first embodiment, both the first reflecting surface 40B and the second reflecting surface 41B are hyperbolic surfaces, but in the present embodiment, the first reflecting surface 40B is a hyperbolic surface and the second reflecting surface 41B is a parabolic surface. The parameters representing the shapes of the first reflecting surface 40B and the second reflecting surface 41B are set to the values shown in Fig. 10. In addition, d1 and d2 described above are set to the values shown in Fig. 10.

Fig. 11 shows an example of the cross-sectional shape of the scanning light Ls emitted from the optical system 12 in a case where θ = 6.5 degrees is set by using the optical system 12 configured based on the condition shown in Fig. 10. Fig. 11 is a simulation image showing a cross-sectional shape of the scanning light Ls at a location about 1 m away from the optical system 12. In the image shown in Fig. 11, the vertical direction is parallel to the Z-axis direction, and the horizontal direction is parallel to the direction orthogonal to the Z-axis direction.

In this simulation, the simulation values of h1 and h2 were h1 = 9.2 mm and h2 = 8.7 mm. That is, almost equal values were obtained as h1 and h2. In addition, the simulation values of f1 and f2 were f1 = 44 mm and f2 = 16 mm. That is, the difference between f1 and f2 was 28 mm, which was almost equal to the value of d2 (29 mm) shown in Fig. 10.

A beam diameter (full width at half maximum) of the scanning light Ls shown in Fig. 11 is approximately 1.6 mm in both the vertical direction and the horizontal direction, as in the first embodiment. That is, the spread angle α of the scanning light Ls is calculated as α = $\tan^{-1}$(1.6/1000) ≈ 0.09 degrees.

[Third Embodiment]

In a third embodiment, a back surface type concave mirror called a Mangin mirror is used as the first reflecting member 40. The configuration of the optical system 12 according to the third embodiment is the same as that of the optical system 12 according to the first embodiment except that the first reflecting member 40 is a back surface type concave mirror.

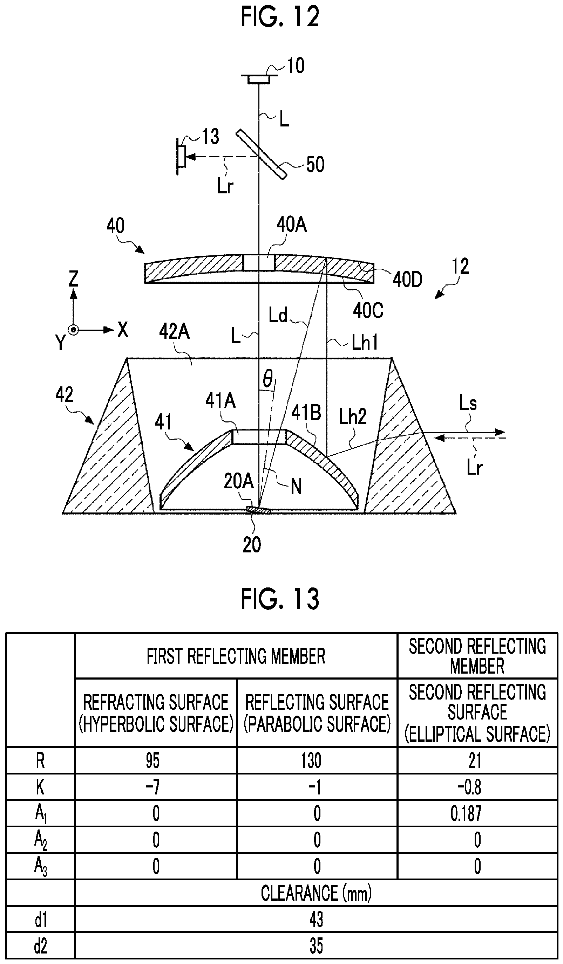

As shown in Fig. 12, the first reflecting member 40 of the present embodiment has a refracting surface 40C and a reflecting surface 40D having a shape rotationally symmetric with respect to the Z-axis $a_z$. Cross-sectional shapes of the refracting surface 40C and the reflecting surface 40D cut along the plane parallel to the Z-axis $a_z$ are each concave. The reflecting surface 40D is an example of a "first reflecting surface" according to the technology of the present disclosure. That is, the reflecting surface 40D corresponds to the first reflecting surface 40B of the first embodiment.

In the present embodiment, the polarized light Ld emitted from the movable mirror 20 is incident on the first reflecting member 40, is refracted by the refracting surface 40C, and then is incident on the reflecting surface 40D. The first reflected light Lh1 emitted from the reflecting surface 40D by the reflecting surface 40D reflecting the polarized light Ld is refracted by the refracting surface 40C and then incident on the second reflecting surface 41B of the second reflecting member 41.

In the present embodiment, the refracting surface 40C is a hyperbolic surface, the reflecting surface 40D is a parabolic surface, and the second reflecting surface 41B is an elliptical surface. The parameters representing the shapes of the refracting surface 40C, the reflecting surface 40D, and the second reflecting surface 41B are set to the values shown in Fig. 13. In addition, d1 and d2 described above are set to the values shown in Fig. 13.

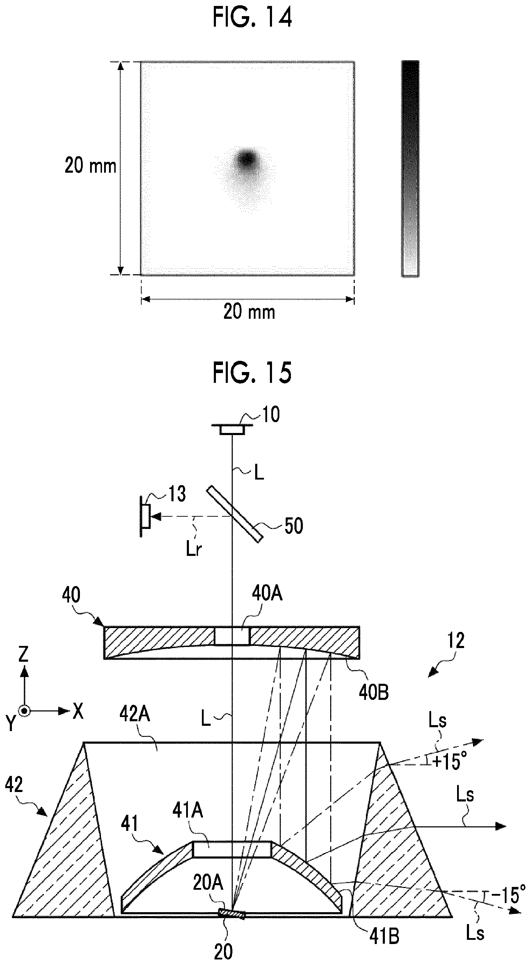

Fig. 14 shows an example of the cross-sectional shape of the scanning light Ls emitted from the optical system 12 in a case where θ = 6.5 degrees is set by using the optical system 12 configured based on the condition shown in Fig. 13. Fig. 14 is a simulation image showing a cross-sectional shape of the scanning light Ls at a location about 1 m away from the optical system 12. In the image shown in Fig. 14, the vertical direction is parallel to the Z-axis direction, and the horizontal direction is parallel to the direction orthogonal to the Z-axis direction.

In this simulation, the simulation values of h1 and h2 were h1 = 10.4 mm and h2 = 9.4 mm. That is, almost equal values were obtained as h1 and h2. In addition, the simulation values of f1 and f2 were f1 = 48 mm and f2 = 15 mm. That is, the difference between f1 and f2 was 33 mm, which was almost equal to the value of d2 (35 mm) shown in Fig. 13.

A beam diameter (full width at half maximum) of the scanning light Ls shown in Fig. 14 is approximately 1.6 mm in both the vertical direction and the horizontal direction, as in the first embodiment. That is, the spread angle α of the scanning light Ls is calculated as α = $\tan^{-1}$(1.6/1000) ≈ 0.09 degrees.

[Fourth Embodiment]

In each of the above-described embodiments, although the deflection angle θ of the movable mirror 20 is fixed, it is also possible to perform scanning with the scanning light Ls in a peripheral direction around the Z-axis and to perform scanning (vertical scanning) in the Z-axis direction by polarizing the deflection angle θ while the movable mirror 20 performs a precession motion. As shown in Fig. 15, in the present embodiment, scanning is performed with the scanning light Ls in the Z-axis direction between a direction in which the scanning light Ls emitted from the optical system 12 forms +15 degrees with respect to a YZ plane and a direction in which the scanning light Ls forms -15 degrees with respect to the YZ plane.

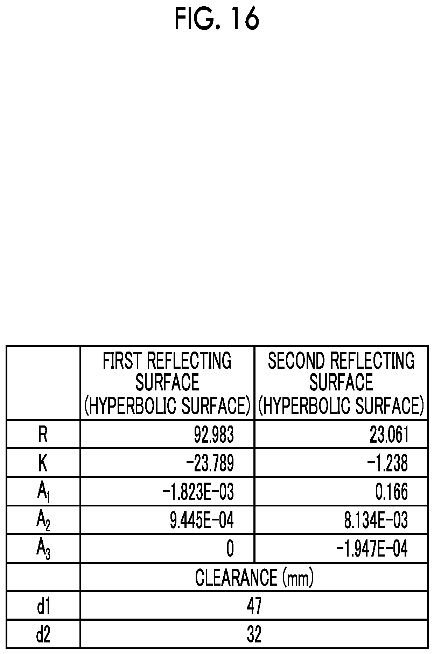

In the present embodiment, both the first reflecting surface 40B and the second reflecting surface 41B are hyperbolic surfaces, as in the first embodiment. The parameters representing the shapes of the first reflecting surface 40B and the second reflecting surface 41B are set to the values shown in Fig. 16. In addition, d1 and d2 described above are set to the values shown in Fig. 16.

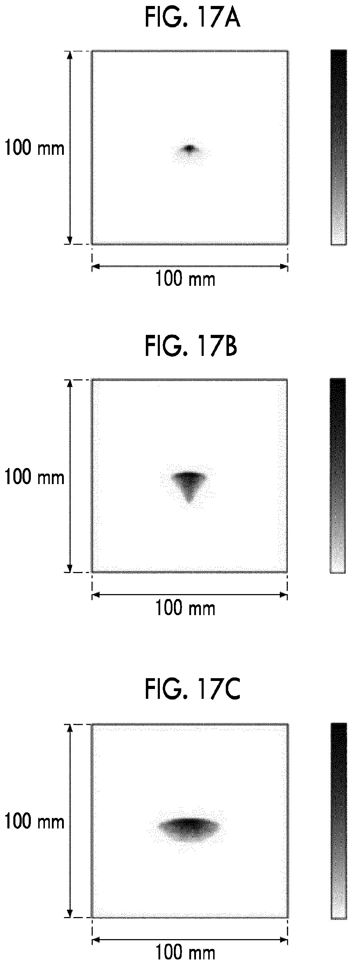

Figs. 17A to 17C each show an example of a cross-sectional shape of the scanning light Ls emitted from the optical system 12 in a case where the deflection angle θ is changed by using the optical system 12 configured based on the condition shown in Fig. 16. Fig. 17A is a simulation image showing a cross-sectional shape of the scanning light Ls in a case where the deflection angle θ is set such that the angle formed between the YZ plane and the scanning light Ls is +15 degrees. Fig. 17B is a simulation image showing a cross-sectional shape of the scanning light Ls in a case where the deflection angle θ is set such that the angle formed between the YZ plane and the scanning light Ls is 0 degrees. Fig. 17C is a simulation image showing a cross-sectional shape of the scanning light Ls in a case where the deflection angle θ is set such that the angle formed between the YZ plane and the scanning light Ls is -15 degrees. Each of the images shown in Figs. 17A to 17C is a simulation image showing the cross-sectional shape of the scanning light Ls at a location approximately 1 m away from the optical system 12.

A beam diameter (full width at half maximum) of the scanning light Ls shown in Fig. 17A is approximately 3 mm in the vertical direction and approximately 5 mm in the horizontal direction. That is, the spread angle α of the scanning light Ls in the vertical direction is calculated as $\alpha = \tan^{-1}(3/1000) \approx 0.17$ degrees, and the spread angle α of the scanning light Ls in the horizontal direction is calculated as $\alpha = \tan^{-1}(5/1000) \approx 0.29$ degrees.

A beam diameter (full width at half maximum) of the scanning light Ls shown in Fig. 17B is approximately 10 mm in both the vertical direction and the horizontal direction. That is, the spread angle α of the scanning light Ls is calculated as $\alpha = \tan^{-1}(10/1000) \approx 0.57$ degrees.

A beam diameter (full width at half maximum) of the scanning light Ls shown in Fig. 17C is approximately 5 mm in the vertical direction and approximately 20 mm in the horizontal direction. That is, the spread angle α of the scanning light Ls in the vertical direction is calculated as $\alpha = \tan^{-1}(5/1000) \approx 0.29$ degrees, and the spread angle α of the scanning light Ls in the horizontal direction is calculated as $\alpha = \tan^{-1}(20/1000) \approx 1.1$ degrees.

[Comparative Example]

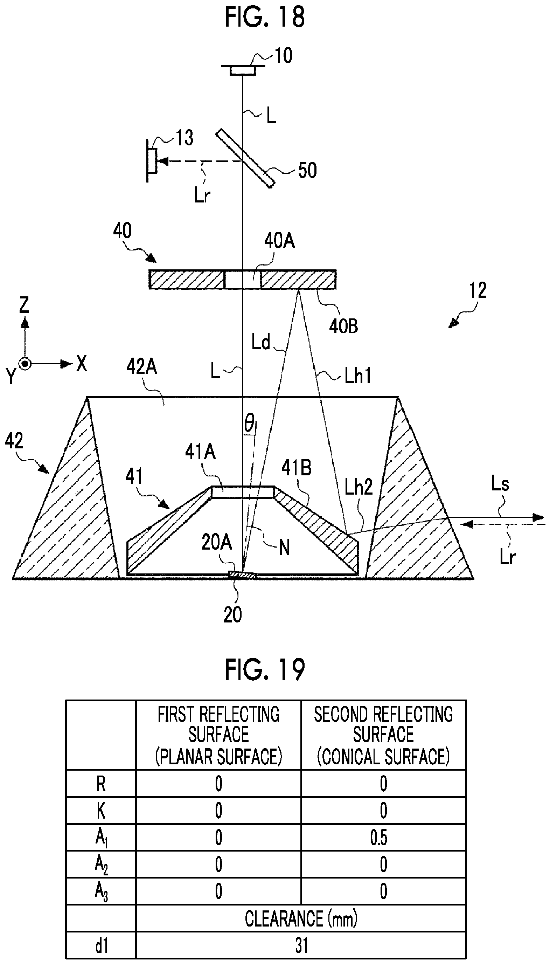

Next, a comparative example will be described. Fig. 18 shows a configuration of the optical system 12 according to a comparative example. In the present comparative example, the first reflecting surface 40B is a planar surface, and the second reflecting surface 41B is a conical surface. That is, cross-sectional shapes of the first reflecting surface 40B and the second reflecting surface 41B cut along the plane parallel to the Z-axis $a_z$ are each linear. In the present comparative example, the parameters representing the shapes of the first reflecting surface 40B and the second reflecting surface 41B are set to the values shown in Fig. 19. Further, d1 described above is set to the value shown in Fig. 19.

In the present comparative example, since the first reflecting surface 40B is a planar surface, the optical path of the first reflected light Lh1 emitted from the first reflecting surface 40B is not parallel to the Z-axis $a_z$. That is, the relationship of h1 = h2 and the relationship of f1 = f2 + d2 described in each of the above-described embodiments are not satisfied.

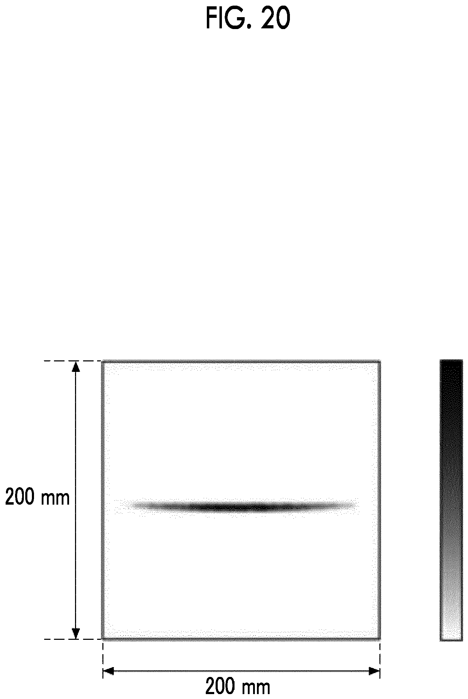

Fig. 20 shows an example of the cross-sectional shape of the scanning light Ls emitted from the optical system 12 in a case where θ = 6.5 degrees is set by using the optical system 12 configured based on the condition shown in Fig. 19. Fig. 20 is a simulation image showing a cross-sectional shape of the scanning light Ls at a location about 1 m away from the optical system 12. In the image shown in Fig. 20, the vertical direction is parallel to the Z-axis direction, and the horizontal direction is parallel to the direction orthogonal to the Z-axis direction.

A beam diameter (full width at half maximum) of the scanning light Ls shown in Fig. 20 is approximately 8 mm in the vertical direction and approximately 100 mm in the horizontal direction. That is, the spread angle α of the scanning light Ls in the vertical direction is calculated as $\alpha = \tan^{-1}(8/1000) \approx 0.46$ degrees, and the spread angle α of the scanning light Ls in the horizontal direction is calculated as $\alpha = \tan^{-1}(100/1000) \approx 5.7$ degrees.

In the comparative example, since the cross-sectional shapes of the first reflecting surface 40B and the second reflecting surface 41B are linear, the spread of the beam diameter occurs. In particular, in the comparative example, the dependence of the deflection angle θ is large, and the spread of the beam diameter in the horizontal direction becomes large in a case where the deflection angle θ is small. On the other hand, in each of the above-described embodiments, since the cross-sectional shape of the first reflecting surface 40B is concave and the cross-sectional shape of the second reflecting surface 41B is convex, the spread of the beam diameter is suppressed. That is, according to the technology of the present disclosure, it is possible to suppress a decrease in spatial resolution of distance measurement due to the spread of the beam diameter.

In each of the above-described embodiments, the first reflecting surface of the first reflecting member is a hyperbolic surface or a parabolic surface, and the second reflecting surface of the second reflecting member is a hyperbolic surface, a parabolic surface, or an elliptical surface. In addition, it is preferable that the shape of any one or both of the first reflecting surface and the second reflecting surface is an odd-order aspherical surface. The odd-order aspherical surface means a curved surface including odd-order aspherical coefficients as represented by Equation (1).

Further, in each of the above-described embodiments, the incident direction of the laser light L on the movable mirror 20 is the Z-axis direction, but the incident direction of the laser light L is not limited to the Z-axis direction and may be a direction intersecting the Z-axis direction (for example, a direction orthogonal to the Z-axis direction).

In addition, by cutting out a portion of the optical system 12 of each of the above-described embodiments, it is also possible to configure a LiDAR apparatus in which a scanning range of the laser light L is, for example, 270 degrees or 180 degrees.

All documents, patent applications, and technical standards described in the present specification are incorporated in the present specification by reference to the same extent as in a case where the individual documents, patent applications, and technical standards were specifically and individually stated to be incorporated by reference.

## Claims

1. An optical system on which polarized light polarized by a movable mirror is incident, comprising:

   a first reflecting member that is rotationally symmetric with respect to a first axis and has a first reflecting surface that reflects the polarized light to emit reflected light as first reflected light; and
   a second reflecting member that is rotationally symmetric with respect to the first axis and has a second reflecting surface that reflects the first reflected light to emit reflected light as second reflected light,
   wherein a cross-sectional shape of the first reflecting surface cut along a plane parallel to the first axis is concave,
   a cross-sectional shape of the second reflecting surface cut along the plane parallel to the first axis is convex,
   an optical path of the first reflected light is parallel to the first axis, and
   an optical path of the second reflected light is directed outward from the first axis.

2. The optical system according to claim 1,
   wherein the movable mirror rotationally moves in a state in which a normal direction thereof is tilted in a certain angular range with respect to the first axis.

3. The optical system according to claim 1 or 2,

   wherein the polarized light is parallel light, and
   a converged position of the first reflected light and a converged position of a virtual image of reflected light, which is reflected by the second reflecting surface in a case where parallel light is made virtually incident on the second reflecting surface from the optical path of the second reflected light, coincide with each other.

4. The optical system according to claim 3,

   wherein f1 denoting a distance from the first reflecting surface to the converged position of the first reflected light, f2 denoting a distance from the second reflecting surface to the converged position of the virtual image, and d denoting a distance on the first axis between the first reflecting surface and the second reflecting surface are within a range of $0.9 \times d \leq f1 - f2 \leq 1.1 \times d$.

5. The optical system according to any one of claims 1 to 4,
   wherein a shape of any one of the first reflecting surface or the second reflecting surface is a hyperbolic surface.

6. The optical system according to any one of claims 1 to 5,
   wherein a shape of any one of the first reflecting surface or the second reflecting surface is an odd-order aspherical surface.

7. The optical system according to any one of claims 1 to 6, further comprising:
   a prism that is rotationally symmetric with respect to the first axis, is disposed outward of the second reflecting member, and refracts the second reflected light.

8. The optical system according to claim 7,
   wherein a cross-sectional shape of the prism cut along the plane parallel to the first axis is a triangle.

9. An optical scanning apparatus comprising:

   the optical system according to any one of claims 1 to 8;
   a movable mirror device that has the movable mirror; and

a light source that emits light to be incident on the movable mirror.

10. The optical scanning apparatus according to claim 9,
wherein the light is incident on the movable mirror along the first axis.

11. The optical scanning apparatus according to claim 9 or 10,
wherein the second reflected light is emitted as scanning light in all directions around the first axis.

# FIG. 1

EP 4 318 026 A1

FIG. 2

## FIG. 3

## FIG. 4

# FIG. 5

# FIG. 6

## FIG. 7

## FIG. 8

|  | FIRST REFLECTING SURFACE (HYPERBOLIC SURFACE) | SECOND REFLECTING SURFACE (HYPERBOLIC SURFACE) |
|---|---|---|
| R | 80 | 22 |
| K | -20 | -2 |
| $A_1$ | 0 | 0.3 |
| $A_2$ | 0 | 0 |
| $A_3$ | 0 | 0 |
|  | CLEARANCE (mm) | |
| d1 | 46 | |
| d2 | 33 | |

## FIG. 9

20 mm

20 mm

## FIG. 10

|  | FIRST REFLECTING SURFACE (HYPERBOLIC SURFACE) | SECOND REFLECTING SURFACE (PARABOLIC SURFACE) |
|---|---|---|
| R | 80 | 20 |
| K | -5 | -1 |
| $A_1$ | 0.01 | 0.24 |
| $A_2$ | 0 | 0 |
| $A_3$ | 0 | 0 |
|  | CLEARANCE (mm) | |
| d1 | 41 | |
| d2 | 29 | |

## FIG. 11

20 mm

20 mm

## FIG. 12

## FIG. 13

| | FIRST REFLECTING MEMBER | | SECOND REFLECTING MEMBER |
|---|---|---|---|
| | REFRACTING SURFACE (HYPERBOLIC SURFACE) | REFLECTING SURFACE (PARABOLIC SURFACE) | SECOND REFLECTING SURFACE (ELLIPTICAL SURFACE) |
| R | 95 | 130 | 21 |
| K | −7 | −1 | −0.8 |
| $A_1$ | 0 | 0 | 0.187 |
| $A_2$ | 0 | 0 | 0 |
| $A_3$ | 0 | 0 | 0 |
| | CLEARANCE (mm) | | |
| d1 | 43 | | |
| d2 | 35 | | |

# FIG. 14

20 mm

20 mm

# FIG. 15

# FIG. 16

|  | FIRST REFLECTING SURFACE (HYPERBOLIC SURFACE) | SECOND REFLECTING SURFACE (HYPERBOLIC SURFACE) |
|---|---|---|
| R | 92.983 | 23.061 |
| K | −23.789 | −1.238 |
| $A_1$ | −1.823E−03 | 0.166 |
| $A_2$ | 9.445E−04 | 8.134E−03 |
| $A_3$ | 0 | −1.947E−04 |
|  | CLEARANCE (mm) | |
| d1 | 47 | |
| d2 | 32 | |

## FIG. 17A

100 mm

100 mm

## FIG. 17B

100 mm

100 mm

## FIG. 17C

100 mm

100 mm

## FIG. 18

## FIG. 19

| | FIRST REFLECTING SURFACE (PLANAR SURFACE) | SECOND REFLECTING SURFACE (CONICAL SURFACE) |
|---|---|---|
| R | 0 | 0 |
| K | 0 | 0 |
| $A_1$ | 0 | 0.5 |
| $A_2$ | 0 | 0 |
| $A_3$ | 0 | 0 |
| | CLEARANCE (mm) | |
| d1 | 31 | |

# FIG. 20

200 mm

200 mm

## INTERNATIONAL SEARCH REPORT

| International application No. |
| --- |
| **PCT/JP2022/000998** |

| A. | CLASSIFICATION OF SUBJECT MATTER |
| --- | --- |

*G01S 7/481*(2006.01)i; *G02B 26/08*(2006.01)i; *G02B 26/10*(2006.01)i
FI:  G01S7/481 A; G02B26/10 104Z; G02B26/10 C; G02B26/08 E

According to International Patent Classification (IPC) or to both national classification and IPC

| B. | FIELDS SEARCHED |
| --- | --- |

Minimum documentation searched (classification system followed by classification symbols)

G01S7/48-7/51; G01S17/00-17/95; G02B26/10-26/12; G01C1/00-1/14; G01C5/00-15/14; G01C3/00-3/32; G01B11/00-11/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2020/100955 A1 (NEC CORP) 22 May 2020 (2020-05-22) paragraphs [0092]-[0097], fig. 17-18 | 1-11 |
| A | JP 2020-526755 A (AEYE INC) 31 August 2020 (2020-08-31) paragraph [0095], fig. 19 | 1-11 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 March 2022** | **29 March 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/000998**

| Patent document cited in search report | | | Publication date (day/month/year) | Patent family member(s) | | | Publication date (day/month/year) |
|---|---|---|---|---|---|---|---|
| WO | 2020/100955 | A1 | 22 May 2020 | (Family: none) | | | |
| JP | 2020-526755 | A | 31 August 2020 | US | 2020/0333587 | A1 | |
| | | | | paragraph [0125], fig. 19 | | | |
| | | | | WO | 2019/010425 | A1 | |
| | | | | EP | 3649480 | A | |
| | | | | KR | 10-2020-0024888 | A | |
| | | | | CN | 111108406 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019167587 A

- WO 2019167587A A

**Non-patent literature cited in the description**

- Resonant biaxial 7-mm MEMS mirror for omnidirectional scanning. *J. Micro/Nanolith. MEMS MOEMS,* January 2014, vol. 13 (1), 011103